# EUROPÄISCHE PATENTSCHRIFT

(11) **EP 3 721 308 B1**
(45) Veröffentlichungstag und Bekanntmachung des Hinweises auf die Patenterteilung: **09.03.2022**
(21) Anmeldenummer: 18816014.7
(22) Anmeldetag: 06.12.2018
(51) Int. Cl.: G05D 1/02

(54) **VERFAHREN ZUM BEWEGEN EINER FAHRZEUGKOLONNE AUF BASIS EINER DER FAHRZEUGKOLONNE ZUGEORDNETEN, VORGEBBAREN GESAMTBETRIEBSSTRATEGIE**
METHOD FOR MOVING A LINE OF VEHICLES BASED ON A PREDEFINABLE OVERALL OPERATING STRATEGY ASSOCIATED WITH THE LINE OF VEHICLES
PROCÉDÉ DE DÉPLACEMENT D'UNE COLONNE DE VÉHICULES SUR LA BASE D'UNE STRATÉGIE DE FONCTIONNEMENT TOTALE PRÉDÉTERMINABLE ASSOCIÉE À LA COLONNE DE VÉHICULES

(30) Priorität: 08.12.2017 DE 102017011346; 09.02.2018 DE 102018001054
(43) Veröffentlichungstag der Anmeldung: 14.10.2020
(73) Patentinhaber: KNORR-BREMSE Systeme für Nutzfahrzeuge GmbH, 80809 München (DE)
(72) Erfinder: HECKER, Falk, 71706 Markgröningen (DE); GÜCKER, Ulrich, 71701 Schwieberdingen (DE); MUSTAPHA, Adnan, 75433 Maulbronn (DE)
(86) Internationale Anmeldenummer: PCT/EP2018/083810
(87) Internationale Veröffentlichungsnummer: WO 2019/110736

(56) Entgegenhaltungen:
- EP-A1- 0 991 046
- EP-A2- 1 569 183
- DE-A1-102007 046 765
- DE-A1-102010 028 637
- US-A1- 2006 102 394

## Beschreibung

Die Erfindung betrifft ein Verfahren zum Bewegen einer ein erstes führendes Kraftfahrzeug und wenigstens ein dem ersten führenden Kraftfahrzeug elektronisch gekoppelt nachfolgendes zweites Kraftfahrzeug aufweisenden Fahrzeugkolonne, bei welchem die Kraftfahrzeuge auf Basis einer der Fahrzeugkolonne zugeordneten, vorgebbaren Gesamtbetriebsstrategie zumindest vorübergehend in einem vorgebbaren, gleichbleibenden Längsabstand zueinander entlang einer Fahrstrecke bewegt werden, gemäß dem Oberbegriff von Anspruch 1.

Mittels der in modernen Kraftfahrzeugen vorhandenen Fahrassistenzsysteme kann dabei das Fahren in der Fahrzeugkolonne zumindest für die dem Führungsfahrzeug folgenden Kraftfahrzeuge soweit automatisiert werden, dass für die dem Führungsfahrzeug folgenden Kraftfahrzeuge ein autonomes Fahren möglich wird. Die Fahrzeugführer der nachfolgenden Kraftfahrzeuge müssen somit während der Kolonnenfahrt nicht mehr selbstständig die Verkehrsbedingungen überwachen.

Eine solcher lose gekoppelte Fahrzeugkolonne umfasst mindestens ein erstes führendes sowie ein letztes Kraftfahrzeug und evtl. mittlere Kraftfahrzeuge. Es ist bekannt, Kraftfahrzeuge elektronisch gekoppelt, längs- und quergeregelt möglichst dicht hintereinander fahren zu lassen. Das jeweilige Folgekraftfahrzeug orientiert sich dabei beispielsweise optisch am vorausfahrenden Kraftfahrzeug. Die Kraftfahrzeuge sind auch beispielsweise mit Sensoren zu Totwinkel- und Rückraumüberwachung und zur Fahrspurorientierung sowie mit Mitteln wenigstens zur Fahrzeug-zu-Fahrzeug-Kommunikation ausgestattet. Derartige lose gekoppelte Fahrzeugverbände oder Fahrzeugkolonnen von Kraftfahrzeugen werden in der Literatur im Allgemeinen als "Platoon" bezeichnet.

Die Kraftfahrzeuge können dabei auch über entsprechende Fahrerassistenzsysteme zur automatischen Abstandshaltung (auch als ACC-Systeme bekannt - Adaptive Cruise Control) zu der Fahrzeugkolonne elektronisch gekoppelt sein. Hierzu kann der aktuelle Abstand des vorausfahrenden Kraftfahrzeugs über einen Sensor in dem dahinterfahrenden Kraftfahrzeug bestimmt werden und der Abstand auf einen vorgegebenen Sollwert, z. B. 8 m, geregelt werden. Zur Abstandsmessung können beispielsweise Radarsensoren oder Lidarsensoren verwendet werden.

Bei enger Kolonnenfahrt während Fahrten ab ca. 80 km/h können die Luftwiderstände der Kolonnenfahrzeuge um bis zu 30% reduziert werden. Hierbei sind typischerweise Abstände im Bereich von 8 m bis 20 m zwischen dem vorausfahrenden und dem diesem nachfolgenden Kraftfahrzeug günstig, um eine signifikante Reduktion des Luftwiderstands zu erreichen. Je kleiner die Abstände zwischen den beteiligten Kraftfahrzeugen sind, desto kleiner werden die Luftwiderstände der einzelnen Kraftfahrzeuge. Zur signifikanten Reduzierung des Luftwiderstands werden aufgrund der geringen Abstände höhere Anforderungen an die Fahrerassistenzsysteme zu automatischen Abstandshaltung gestellt.

Gattungsgemäße Verfahren zur elektronischen Kopplung von Kraftfahrzeugen über Fahrerassistenzsysteme zu Fahrzeugkolonnen sind in DE 10 2007 046 765 A1 oder EP 1 569 183 A2 beschrieben. US 2006/0102394A1 beschreibt ein Regenerations- und Bremsmanagementsystem mit einer Antriebsmaschine, einer der Antriebsmaschine zugeordneten Energiespeichervorrichtung und einem regenerativen Bremssystem mit einer Steuerung und mindestens einer Reibungsbremse, wobei das regenerative Bremssystem so konfiguriert ist, dass es die mindestens eine Reibungsbremse während des regenerativen Bremsens zumindest teilweise deaktiviert. DE 10 2010 028 637 A1 beschreibt eine elektronische Kopplung von Fahrzeugen zur Reduzierung des Luftwiderstands. EP0991046A1 offenbart ein automatisches Fahrzeug-Folgesteuerungssystem, das ein von einem Fahrer geführtes Führungsfahrzeug und einen Zug von Folgefahrzeugen umfasst, die im Folgemodus zum Führungsfahrzeug fahren.

An die Steuerung und Regelung einer Fahrzeugkolonne werden unter anderem die folgenden Anforderungen gestellt:
- Einhalten eines kurzen Längsabstands der beteiligten Fahrzeuge untereinander (z.B. 8m - 20m) mit einer definierten Toleranz.
- Automatische Querführung der Folgefahrzeuge möglichst exakt in der Spur des Führungsfahrzeugs.
- Sicherstellen der Stabilität der Fahrzeugkolonne, d.h. insbesondere Vermeiden des "Ziehharmonika-Effekts" (Kettenstabilität - string stability), der nicht nur zu einem erhöhten Verbrauch führt, sondern auch die Gefahr von Auffahrunfällen signifikant erhöht. Die Kettenstabilität ist dabei für Längs- und Querführung einzuhalten.
- Kleine Änderungen in der Geschwindigkeit der vorausfahrenden Kraftfahrzeuge der Fahrzeugkolonne dürfen nicht von den nachfolgenden Kraftfahrzeugen verstärkt ausgeführt werden.
- Für die Führung in Querrichtung darf es bei den nachfolgenden Kraftfahrzeugen nicht zu einem Schneiden von Kurven und damit zu einem Verlassen der Fahrspur kommen.
- Ausreichend schnelle Bremsreaktion der Folgefahrzeuge bei starkem Bremsen des Führungsfahrzeugs zur Vermeidung von Auffahrunfällen.

Durch unterschiedliche technische Ausrüstungen und Eigenschaften der an der Fahrzeugkolonne beteiligten Kraftfahrzeuge wie z.B. Motorleistung, Leistungsfähigkeit der Dauer- oder Betriebsbremse, Fahrzeugkonfiguration, Beladungszustand und Reifeneigenschaften ist die Einhaltung der obigen Anforderungen oft erschwert.

In einem Fall, in welchem beispielsweise vor dem ersten führenden Kraftfahrzeug der Fahrzeugkolonne plötzlich ein Hindernis auftaucht, die entweder den Fahrer des ersten führenden Kraftfahrzeugs oder eine Autopiloteinrichtung dieses Kraftfahrzeugs zu einer Notbremsung eigentlich mit maximal möglicher Verzögerung zwingen würde, entsteht ein Dilemma.

Denn eigentlich könnte das erste führende Kraftfahrzeug mit seiner ihm maximal zur Verfügung stehenden Verzögerung bremsen, um das Kollisionsrisiko bzw. eine Kollisionsgeschwindigkeit mit dem Hindernis so gering wie möglich zu halten. Damit besteht aber das Risiko, dass es zum Auffahren von Kraftfahrzeugen innerhalb der Fahrzeugkolonne kommt, falls sich Kraftfahrzeuge in der Fahrzeugkolonne befinden, welche z.B. wegen schwächerer Bremsen oder einer höheren Beladung eine geringere maximale Verzögerung als das erste führende Kraftfahrzeug aufbringen können.

Damit die nachfolgenden Kraftfahrzeuge nicht aufeinander auffahren, könnte daher das erste führende Kraftfahrzeug mit der maximalen Verzögerung des am "schwächsten" bremsenden Kraftfahrzeugs der Fahrzeugkolonne abgebremst werden. Dies würde allerdings dazu führen, dass das führende erste Kraftfahrzeug aufgrund der dann nach dem hinsichtlich Bremsen "schwächsten" Teilnehmer festgelegten Vorgaben mit einer geringeren, nämlich der relativ geringen maximalen Verzögerung des am "schwächsten" bremsenden Teilnehmers bremst. Infolgedessen würde in diesem Fall das Kollisionsrisiko bzw. die Kollisionsgeschwindigkeit mit dem Hindernis ansteigen.

Der vorliegenden Erfindung liegt die Aufgabe zugrunde, ein Verfahren der oben beschriebenen Art derart weiter zu entwickeln, dass die Sicherheit von aus lose gekoppelten Kraftfahrzeugen bestehenden Fahrzeugkolonnen erhöht wird.

Dese Aufgabe durch die Merkmale der Ansprüche 1 und 7 gelöst.

### Offenbarung der Erfindung

Die Erfindung geht aus von einem Verfahren zum Bewegen einer ein erstes führendes Kraftfahrzeug und wenigstens ein dem ersten führenden Kraftfahrzeug elektronisch gekoppelt nachfolgendes zweites Kraftfahrzeug aufweisenden Fahrzeugkolonne, bei welchem die Kraftfahrzeuge auf Basis einer der Fahrzeugkolonne zugeordneten, vorgebbaren Gesamtbetriebsstrategie zumindest vorübergehend in einem vorgebbaren, gleichbleibenden Längsabstand zueinander entlang einer Fahrstrecke bewegt werden.

Unter der Gesamtstrategie soll hier insbesondere eine Längsregelung der Kraftfahrzeuge der Fahrzeugkolonne (Kolonnenregler) berechnet aus den Beschleunigungs-, Geschwindigkeits- und/oder Abstandsmessdaten der einzelnen Kraftfahrzeuge der Fahrzeugkolonne verstanden werden, aus denen dann Stellwerte für eine Antriebsmaschine und/oder für eine Bremseinrichtung der einzelnen Kraftfahrzeuge der Fahrzeugkolonne bestimmt werden.

Insbesondere sind die Kraftfahrzeuge der Fahrzeugkolonne jeweils mit einer Fahrzeugfolgeregelung (Abstandsregelung zum vorausfahrenden Fahrzeug) ausgestattet, wobei bei den Kraftfahrzeugen der Fahrzeugkolonne jeweils durch die Fahrzeugfolgeregelung Längsführungseingriffe vorgenommen werden, um die Kraftfahrzeuge zumindest vorübergehend in dem vorgebbaren, gleichbleibenden Längsabstand zueinander entlang der Fahrstrecke zu bewegen. Die Längsführungseingriffe werden insbesondere automatisch durch Fahrerassistenzsysteme wie z.B. ACC (Adaptive Cruise Control) vorgenommen, wobei beispielsweise jedes der Kraftfahrzeuge der Fahrzeugkolonne mit einem solchen ACC-System ausgestattet ist. Die Längsführungseingriffe erfolgen dann beispielsweise jeweils durch Eingriffe in die Bremsanlage und/oder eine Antriebsmaschine der Kraftfahrzeuge.

Das eingangs beschriebene Dilemma kann dann gemäß der Erfindung vermieden werden, indem die Gesamtbetriebsstrategie der Fahrzeugkolonne wenigstens die folgenden Schritte beinhaltet:
a) Wenn das erste führende Kraftfahrzeug durch einen vom Fahrer des ersten führenden Kraftfahrzeugs und/oder durch einen bei dem ersten führenden Kraftfahrzeug automatisch ausgelösten Bremsvorgang abgebremst wird, dann erfolgt die Abbremsung des ersten führenden Kraftfahrzeugs zunächst mit einem ersten Wert für die Längsverzögerung, welcher einer vorgegebenen Mindestlängsverzögerung entspricht, die unabhängig von einer Verzögerungsvorgabe durch den Fahrer oder von einer automatisch generierten Verzögerungsvorgabe ist, und dann
b) wird während des laufenden Bremsvorgangs wenigstens eine den Längsabstand zwischen wenigstens zwei Kraftfahrzeugen der Fahrzeugkolonne repräsentierende Größe detektiert, und dann
c) wird die Längsverzögerung des ersten führenden Kraftfahrzeugs während des laufenden Bremsvorgangs auf einen zweiten Wert erhöht, welcher größer als der erste Wert ist, und wiederum die wenigstens eine, sich dann einstellende den Längsabstand zwischen den wenigstens zwei Kraftfahrzeugen der Fahrzeugkolonne repräsentierende Größe festgestellt, und
d) falls dann festgestellt wird, dass sich die wenigstens eine den Längsabstand zwischen wenigstens zwei Kraftfahrzeugen der Fahrzeugkolonne repräsentierende Größe im Sinne eines kleiner werdenden Längsabstands über ein bestimmtes Maß hinaus verändert hat, dann wird die Längsverzögerung des ersten führenden Kraftfahrzeugs auf einen Wert in einem Bereich eingestellt, welcher sich von dem ersten Wert bis zu dem zweiten Wert erstreckt, und
e) falls dann aber festgestellt wird, dass sich die wenigstens eine den Längsabstand zwischen wenigstens zwei Kraftfahrzeugen der Fahrzeugkolonne repräsentierende Größe im Sinne eines größer werdenden Längsabstands über ein bestimmtes Maß hinaus verändert hat oder gleich geblieben ist, dann wird die Längsverzögerung des ersten führenden Kraftfahrzeugs während des laufenden Bremsvorgangs solange weiter erhöht, bis sich die wenigstens eine den Längsabstand zwischen wenigstens zwei Kraftfahrzeugen der Fahrzeugkolonne repräsentierende Größe im Sinne eines kleiner werdenden Längsabstands nicht über ein bestimmtes Maß hinaus verändert.

Unter "Längsverzögerung" wird hier im mathematischen Sinne eine negative Längsbeschleunigung verstanden, wobei eine Zunahme oder Erhöhung der Längsverzögerung bedeutet, dass der Betrag der Längsverzögerung zunimmt, beispielsweise von -5m/s² auf -6m/s². Dasselbe gilt dann umgekehrt auch für eine Abnahme oder Reduzierung der Längsverzögerung, wobei dann der Betrag der Längsverzögerung abnimmt, beispielsweise von -6m/s² auf -5m/s².

Das erste führende Kraftfahrzeug kann den Bremsvorgang beispielsweise mittels einer Betätigung eines Bremsbetätigungsorgans durch den Fahrer und/oder durch eine Autopiloteinrichtung des ersten führenden Kraftfahrzeugs abhängig von erfassten Umfelddaten automatisch einleiten, beispielsweise, wenn der Fahrer oder die Autopiloteinrichtung plötzlich ein Hindernis wie ein vor dem ersten führenden Fahrzeug einscherendes Kraftfahrzeug oder ein stationäres Hindernis detektiert und deshalb eine Notbremsung des ersten führenden Kraftfahrzeugs und in der Folge auch ein Abbremsen der gesamten Fahrzeugkolonne notwendig ist.

Unter "Mindestlängsverzögerung" wird hier eine Längsverzögerung verstanden, welche ein Kraftfahrzeug mindestens aufbringen muss. Insbesondere stellt die vorgegebene Mindestlängsverzögerung eine Mindestlängsverzögerung dar, welche durch die Bremseinrichtung jedes Kraftfahrzeugs aufgrund gesetzlicher Vorschriften mindestens erzielt werden muss und beispielsweise wenigstens -5m/s² beträgt. Denn es wird davon ausgegangen, dass jedes Kraftfahrzeug und damit auch jedes Kraftfahrzeug der Fahrzeugkolonne in der Lage ist, diese gesetzliche Mindestlängsverzögerung aufzubringen. Obwohl daher das erste führende Fahrzeug unmittelbar nach dem Einleiten des Bremsvorgangs mit einer gegenüber der vorgegebenen Mindestlängsverzögerung höheren Längsverzögerung abgebremst werden könnte, beispielsweise weil seine Bremsanlage dies zulassen würde, erfolgt das Abbremsen des ersten führenden Kraftfahrzeugs (zunächst) lediglich mit der vorgegebenen Mindestlängsverzögerung und daher unabhängig von der Längsverzögerungsvorgabe durch den Fahrer (Bremspedal) und/oder die Autopiloteinrichtung.

Das Abbremsen des ersten führenden Kraftfahrzeugs mit der vorgegebenen Mindestlängsverzögerung löst nun infolge der jeweils vorhandenen Fahrzeugfolgeregelung (Abstandsregelung zum vorausfahrenden Fahrzeug) bei den weiteren Kraftfahrzeugen der Fahrzeugkolonne eine automatische Abbremsung aus.

Gemäß der Erfindung wird daher das erste führende Kraftfahrzeug bei einem Bremsvorgang (zunächst) lediglich mit einer vorgegebenen Mindestverzögerung abgebremst und dabei die wenigstens eine, sich dann einstellende den Längsabstand zwischen wenigstens zwei Kraftfahrzeugen der Fahrzeugkolonne repräsentierende Größe festgestellt bzw. insbesondere über einen (bestimmten) Zeitraum beobachtet.

Dann wird die Verzögerung des ersten führenden Kraftfahrzeugs im Laufe des bereits eingeleiteten Bremsvorgangs erhöht und wiederum die wenigstens eine, sich dann einstellende den Längsabstand zwischen wenigstens zwei Kraftfahrzeugen der Fahrzeugkolonne repräsentierende Größe insbesondere über einen (bestimmten) Zeitraum beobachtet festgestellt bzw. beobachtet.

Wenn sich die wenigstens eine, sich dann einstellende den Längsabstand zwischen wenigstens zwei Kraftfahrzeugen der Fahrzeugkolonne repräsentierende Größe gegenüber zuvor, d.h. beim Bremszustand mit der vorgegebenen Mindestverzögerung des ersten führenden Kraftfahrzeugs im Sinne eines kleiner werdenden Längsabstands über ein bestimmtes Maß hinaus verändert hat, so deutet dies daraufhin, dass die Erhöhung der Verzögerung des ersten führenden Fahrzeugs bereits an eine obere Grenze gestoßen ist, ab welcher die Gefahr besteht, dass es zum Auffahren von Kraftfahrzeugen innerhalb der Fahrzeugkolonne kommen kann. Dies rührt beispielsweise daher, dass wie oben bereits beschrieben, wenigstens ein Kraftfahrzeug der Fahrzeugkolonne eine nur relative niedrige maximale Verzögerung aufbringen kann. In diesem Fall wird dann die Längsverzögerung des ersten führenden Kraftfahrzeugs auf einen Wert in einem Bereich eingestellt, welcher sich von dem ersten Wert bis zu dem zweiten Wert erstreckt, um das Kollisionsrisiko innerhalb der Fahrzeugkolonne zu senken bzw. zu minimieren.

Wenn demgegenüber festgestellt wird, dass sich die wenigstens eine den Längsabstand zwischen wenigstens zwei Kraftfahrzeugen der Fahrzeugkolonne repräsentierende Größe im Sinne eines größer werdenden Längsabstands über ein bestimmtes Maß hinaus verändert hat oder gleich geblieben ist, so deutet dies daraufhin, dass die Erhöhung der Verzögerung des ersten führenden Fahrzeugs noch zu gering war und dass insbesondere wenigstens einige Kraftfahrzeuge der Fahrzeugkolonne in der Lage sind, jeweils eine noch höhere Verzögerung aufzubringen. In diesem Fall wird dann die Längsverzögerung des ersten führenden Kraftfahrzeugs während des laufenden Bremsvorgangs solange weiter erhöht, bis sich die wenigstens eine den Längsabstand zwischen wenigstens zwei Kraftfahrzeugen der Fahrzeugkolonne repräsentierende Größe im Sinne eines kleiner werdenden Längsabstands nicht über ein bestimmtes Maß hinaus verändert. Mit anderen Worten stellt dann eine obere Grenze für eine weitere Erhöhung der Längsverzögerung des ersten führenden Kraftfahrzeugs dar, wenn sich die wenigstens eine den Längsabstand zwischen wenigstens zwei Kraftfahrzeugen der Fahrzeugkolonne repräsentierende Größe im Sinne eines kleiner werdenden Längsabstands über ein bestimmtes Maß hinaus verändert.

Eine Veränderung der wenigstens einen den Längsabstand zwischen wenigstens zwei Kraftfahrzeugen der Fahrzeugkolonne repräsentierenden Größe über ein bestimmtes Maß hinaus bedeutet daher eine signifikante Änderung dieser Größe in dem Sinne, dass die Änderung der Größe einen signifikanten Einfluss auf die Sicherheit während des Abbremsens der Fahrzeugkolonne im Hinblick auf einzuhaltende Längsabstände zwischen den Kraftfahrzeugen ausübt.

Als die wenigstens eine den Längsabstand zwischen wenigstens zwei Kraftfahrzeugen der Fahrzeugkolonne repräsentierende Größe wird insbesondere der Längsabstand selbst und/oder eine Relativgeschwindigkeit und/oder eine Relativbeschleunigung zwischen den wenigstens zwei Kraftfahrzeugen der Fahrzeugkolonne herangezogen. Dabei kann die wenigstens eine den Längsabstand zwischen wenigstens zwei Kraftfahrzeugen der Fahrzeugkolonne repräsentierende Größe zum einen zwischen zwei unmittelbar aufeinander folgenden Kraftfahrzeugen oder auch zwischen zwei mittelbar aufeinander folgenden Kraftfahrzeugen gemessen oder bestimmt werden, wobei sich dann wenigstens ein weiteres Kraftfahrzeug zwischen den beiden Kraftfahrzeugen befindet.

Möglich ist auch, dass als den Längsabstand zwischen wenigstens zwei Kraftfahrzeugen der Fahrzeugkolonne repräsentierende Größe ein Mittelwert von Längsabständen zwischen mehreren unmittelbar aufeinander folgenden Kraftfahrzeugen der Fahrzeugkolonne herangezogen wird.

Ausgehend von dem eingangs beschriebenen Umstand, dass das Bremsvermögen der einzelnen Kraftfahrzeuge, also deren maximal aufbringbare Bremsverzögerung nicht bekannt ist, liegt der positive Effekt der Erfindung dann darin, dass ausgehend von der vorgegebenen Mindestlängsverzögerung die Längsverzögerung bei dem ersten führenden Kraftfahrzeug derart angepasst wird, dass das Bremsvermögen der einzelnen Teilnehmer der Fahrzeugkolonne nicht überfordert wird und dadurch zum einen Kollisionen zwischen den Kraftfahrzeugen vermieden, zum andern aber auch unter dem Aspekt der Kollisionsvermeidung mit einem Hindernis eine größtmögliche Längsverzögerung aufgewendet wird.

Als erstes führendes Kraftfahrzeug der Fahrzeugkolonne wird bei der Erfindung insbesondere ein erstes Kraftfahrzeug der Fahrzeugkolonne verstanden, wie es ständig die automatisch lose gekoppelte Fahrzeugkolonne anführt, ohne von dieser ersten führenden Position abgelöst zu werden. Alternativ kann als erstes führendes Kraftfahrzeug der Fahrzeugkolonne auch ein dem ersten führenden Kraftfahrzeug einer ursprünglichen Fahrzeugkolonne nachfolgendes Kraftfahrzeug herangezogen werden, welches abgebremst wird oder abgebremst werden muss, wenn ein in Bezug auf die Fahrzeugkolonne externes Fahrzeug an irgendeiner Stelle in die Fahrzeugkolonne eingedrungen ist und dadurch ein Abbruchkriterium für die ursprüngliche Fahrzeugkolonne ausgelöst worden ist. In einem solchen Fall bildet dann das abgebremste Kraftfahrzeug das (neue) erste führende Kraftfahrzeug einer restlichen und neu zu bildenden Fahrzeugkolonne aus dem abgebremsten Kraftfahrzeug dem wenigstens einen diesem nachfolgenden Kraftfahrzeug, sofern vorhanden.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine schematische Seitenansicht einer Fahrzeugkolonne aus miteinander lose gekoppelten Kraftfahrzeugen;
- Fig.2: eine schematische Draufsicht der Fahrzeugkolonne von Fig.1;
- Fig.3: ein Ablaufdiagramm einer bevorzugten Ausführungsform des erfindungsgemäßen Verfahrens;
- Fig.4: ein Ablaufdiagramm eines weiteren Verfahrens.

### Beschreibung der Ausführungsbeispiele

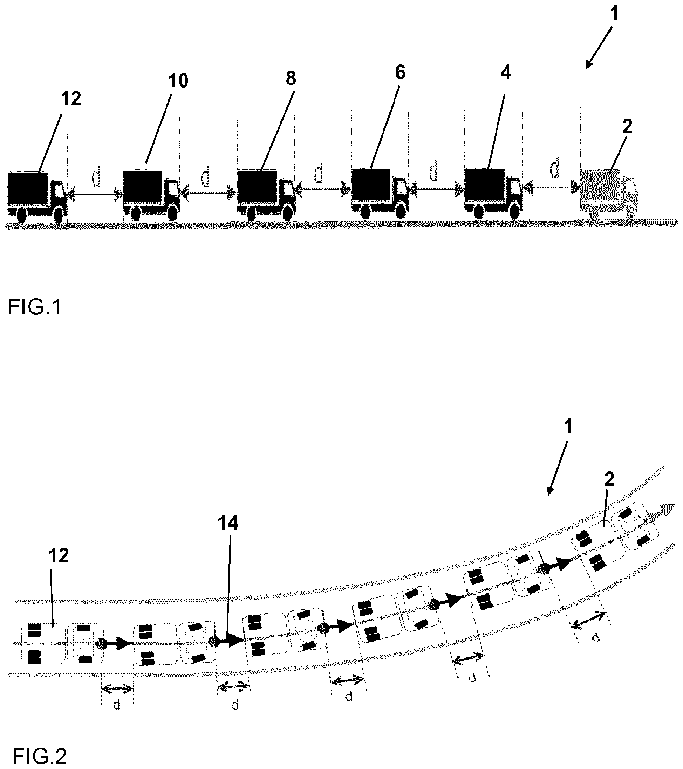

In **Fig. 1** stellt eine schematische Seitenansicht einer Fahrzeugkolonne 1 (Platoon) aus miteinander lose oder elektronisch gekoppelten Fahrzeugen gemäß einer bevorzugten Ausführungsform dar. Die Fahrzeugkolonne 1 umfasst ein Führungsfahrzeug 2 als erstes oder vorderstes führendes Fahrzeug sowie weitere Kraftfahrzeuge, ein zweites Kraftfahrzeug 4, ein drittes Kraftfahrzeug 6, ein viertes Kraftfahrzeug 8, ein fünftes Kraftfahrzeug 12 wie auch ein sechstes letztes Kraftfahrzeug 12. Statt der dargestellten sechs Kraftfahrzeuge kann die Fahrzeugkolonne 1 auch mehr oder weniger Kraftfahrzeuge umfassen. **Fig. 2** stellt die Draufsicht auf die Fahrzeugkolonne 1 dar, wie sie entlang einer Linkskurve einer durch die Fahrzeugkolonne befahrenen Fahrstrecke fährt. Die sechs Kraftfahrzeuge 2 bis 12 stellen dann jeweils einen Teilnehmer der Fahrzeugkolonne 1 dar. Es sei hier angenommen, dass die Bildung der Fahrzeugkolonne 1, d.h. die Verständigung der Kraftfahrzeuge 2 bis 12 untereinander darüber, dass aus ihnen allen eine lose gekoppelte Fahrzeugkolonne 1 gebildet werden soll, abgeschlossen ist.

Im Ausführungsbeispiel handelt es sich bei den Kraftfahrzeugen 2 bis 12 um schwere Nutzfahrzeuge mit jeweils einer elektrisch steuerbaren und hier beispielsweise als Brennkraftmaschine ausgeführten Antriebsmaschine, einer elektrisch steuerbaren elektro-pneumatischen Betriebsbremseinrichtung, einer elektrisch steuerbaren elektro-pneumatischen Parkbremseinrichtung und einer elektrisch steuerbaren Lenkrichtung.

Die Kraftfahrzeuge oder Teilnehmer 2 bis 12 der Fahrzeugkolonne 1 können Daten über bordfeste Fahrzeug-zu-Fahrzeug-Kommunikationseinrichtung austauschen. Im vorliegenden Fall handelt es sich hierbei um drahtlose Fahrzeug-zu-Fahrzeug-Kommunikationseinrichtungen, bei welcher jedes der Kraftfahrzeuge 2 bis 12 jeweils mit einer Sendeeinrichtung sowie mit einer Empfangseinrichtung ausgestattet ist. Alternativ können die Fahrzeug-zu-Fahrzeug-Kommunikationseinrichtungen auch als Laser- oder Infrarotsende- und Empfangseinrichtung ausgeführt sein. In **Fig. 2** wird eine aufgrund der Fahrzeug-zu-Fahrzeug-Kommunikationseinrichtungen stattfindende Fahrzeug-zu-Fahrzeug-Kommunikation durch einen Pfeil 14 symbolisiert.

Zusätzlich kann auch eine drahtlose Fahrzeug-zu-Infrastruktur-Kommunikationseinrichtung vorgesehen sein, welche beispielsweise in jedem der Kraftfahrzeuge oder Teilnehmer 2 bis 12 installiert ist und ebenfalls eine Sendeeinrichtung sowie eine Empfangseinrichtung umfasst. Damit kann jedes der Kraftfahrzeuge 2 bis 12 und insbesondere das Führungsfahrzeug 2 mit einer externen, mobilen oder stationären Infrastruktur kommunizieren.

Jedes der sechs Kraftfahrzeuge 2 bis 12 ist mit einer bekannten Fahrzeug-Folgeregelungseinrichtung ausgestattet, welche einen Längsabstand d der Kraftfahrzeuge 2 bis 12 auf einen bestimmten Wert d einregelt und es ermöglicht, dass die Kraftfahrzeuge 4 bis 12 dem Führungsfahrzeug 2 jeweils durch den Abstand d voneinander beabstandet folgen können. Hierzu sind entsprechende Sensoreinrichtungen in den Kraftfahrzeugen 2 bis 12 verbaut, welche beispielsweise Abstands- und Geschwindigkeitsdaten generieren, welche über die Fahrzeug-zu-Fahrzeug-Kommunikation 14 ausgetauscht werden. Außerdem ist jedes der Kraftfahrzeuge 2 bis 12 mit einem elektronischen Steuergerät ausgestattet, in welchem die Steuer-und Regelroutinen der Fahrzeugfolgeregelung implementiert sind.

Die Fahrzeug-Folgeregelungseinrichtung umfasst daher je Kraftfahrzeug 2 bis 12 eine Sendeeinrichtung und eine Empfangseinrichtung der Fahrzeug-zu-Fahrzeug-Kommunikationseinrichtung, eine Sensoreinrichtung, ein elektronisches Steuergerät sowie wenigstens eine elektrisch steuerbare Antriebsmaschine, eine elektrisch steuerbare Betriebsbremseinrichtung und eine elektrisch steuerbare Lenkrichtung als Aktuatoren.

Aufgrund der Abstands- und Geschwindigkeitsdaten, welche jeweils von dem elektronischen Steuergerät der Fahrzeugfolgeregelung empfangen werden, findet dann im Rahmen der Fahrzeugfolgeregelung eine automatische elektrische Betätigung der elektrischen Lenkeinrichtungen, der elektro-pneumatischen Bremseinrichtungen sowie der elektrisch steuerbaren Antriebsmaschinen jedes in die Fahrzeugkolonne 1 eingegliederten Kraftfahrzeugs 2 bis 12 durch elektrische Stellsignale statt, um einer durch das Führungsfahrzeug 2 vorgegebenen Soll-Trajektorie, hier beispielsweise entlang einer Linkskurve gleich beabstandet zu folgen (siehe **Fig. 2****).**

Weiterhin ist wenigstens das Führungsfahrzeug 2 mit einer Autopiloteinrichtung ausgestattet, welche es erlaubt, das Führungsfahrzeug 2 ohne Zutun des Fahrers autonom betrieben werden kann. Aufgrund dieser Autopiloteinrichtung bremst das Führungsfahrzeug beispielsweise automatisch ab, wenn sich in seiner Fahrtrajektorie ein Hindernis beispielsweise in Form eines externen Kraftfahrzeugs in für die Sicherheit kritischer Weise befindet oder dort hineingerät.

Es wird nun ein Verfahren zum Bewegen der Fahrzeugkolonne 1 vorgeschlagen, bei welchem die Kraftfahrzeuge 2 bis 12 auf Basis einer der Fahrzeugkolonne 1 zugeordneten, vorgebbaren Gesamtbetriebsstrategie zumindest vorübergehend in einem vorgebbaren, gleichbleibenden Längsabstand d zueinander entlang der Fahrstrecke bewegt werden.

Unter der Gesamtstrategie soll hier insbesondere eine Längsregelung der Kraftfahrzeuge 2 bis 12 der Fahrzeugkolonne 1 (Kolonnenregler) berechnet aus den Beschleunigungs-, Geschwindigkeits- und/oder Abstandsmessdaten der einzelnen Kraftfahrzeuge 2 bis 12 der Fahrzeugkolonne 1 verstanden werden, aus denen dann Stellwerte für eine Antriebsmaschine und/oder für eine Bremseinrichtung der einzelnen Kraftfahrzeuge 2 bis 12 der Fahrzeugkolonne 1 bestimmt werden. Durch Eingriffe in die Bremsanlagen und/oder die Antriebsmaschinen der Kraftfahrzeuge 2 bis 12 können dann Längsführungseingriffe erfolgen.

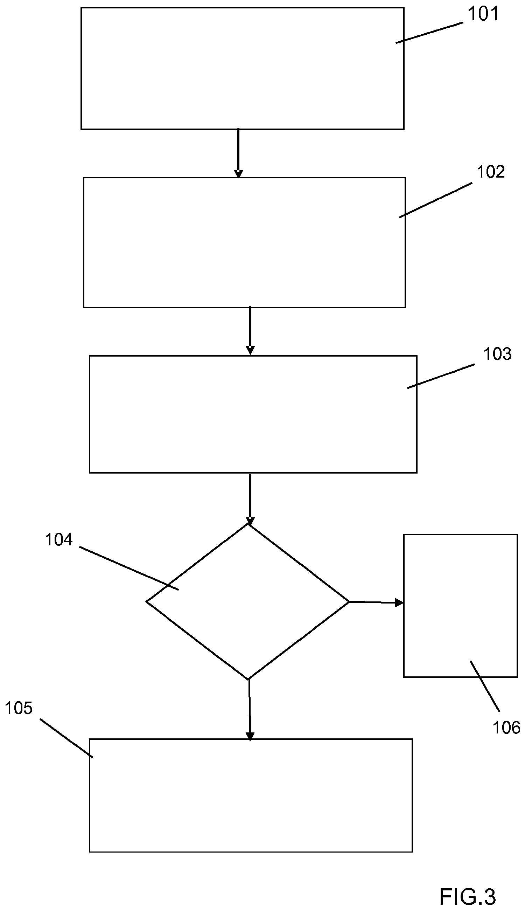

Die Gesamtbetriebsstrategie der Fahrzeugkolonne 1 beinhaltet wenigstens die folgenden Schritte:
Wenn das Führungsfahrzeug 2 durch einen vom Fahrer des Führungsfahrzeugs 2 und/oder durch einen bei dem Führungsfahrzeug 2 automatisch ausgelösten Bremsvorgang abgebremst wird, dann erfolgt die Abbremsung des Führungsfahrzeugs 2 zunächst mit einem ersten Wert für die Längsverzögerung, welcher einer vorgegebenen Mindestlängsverzögerung entspricht, die unabhängig von einer Verzögerungsvorgabe durch den Fahrer oder von einer automatisch generierten Verzögerungsvorgabe ist **(****Fig. 3**, Schritt 101).

Unter "Mindestlängsverzögerung" wird eine Längsverzögerung verstanden, welche ein Kraftfahrzeug 2 bis 12 mindestens aufbringen muss. Insbesondere stellt die vorgegebene Mindestlängsverzögerung eine Mindestlängsverzögerung dar, welche durch die Bremseinrichtung jedes Kraftfahrzeugs 2 bis 12 aufgrund gesetzlicher Vorschriften mindestens erzielt werden muss und beispielsweise wenigstens -5m/s² beträgt. Denn es wird davon ausgegangen, dass jedes Kraftfahrzeug und damit auch jedes Kraftfahrzeug 2 bis 12 der Fahrzeugkolonne 1 in der Lage ist, diese gesetzliche Mindestlängsverzögerung aufzubringen. Obwohl daher das erste führende Fahrzeug 2 unmittelbar nach dem Einleiten des Bremsvorgangs mit einer gegenüber der vorgegebenen Mindestlängsverzögerung höheren Längsverzögerung abgebremst werden könnte, beispielsweise weil seine Bremsanlage dies zulassen würde, erfolgt das Abbremsen des Führungsfahrzeugs 2 (zunächst) lediglich mit der vorgegebenen Mindestlängsverzögerung und daher unabhängig von der Längsverzögerungsvorgabe durch den Fahrer (Bremspedal) und/oder die Autopiloteinrichtung des Führungsfahrzeugs 2.

Dann wird während des laufenden Bremsvorgangs wenigstens eine den Längsabstand d zwischen wenigstens zwei Kraftfahrzeugen der Fahrzeugkolonne 1, beispielsweise zwischen dem ersten Führungsfahrzeug 2 und dem zweiten Kraftfahrzeug 12 repräsentierende Größe detektiert, insbesondere der Längsabstand d selbst (Fig. 3, Schritt 102).

Dann wird die Längsverzögerung des Führungsfahrzeugs 2 während des laufenden Bremsvorgangs auf einen zweiten Wert erhöht, welcher größer als der erste Wert ist **(****Fig.3****,** Schritt 103).

Falls dann festgestellt wird, dass sich die wenigstens eine den Längsabstand d zwischen wenigstens zwei Kraftfahrzeugen 2 bis 12 der Fahrzeugkolonne 1 repräsentierende Größe im Sinne eines kleiner werdenden Längsabstands über ein bestimmtes Maß hinaus verändert hat (**Fig. 3****,** Schritt 104), dann wird die Längsverzögerung des Führungsfahrzeugs 2 auf einen Wert in einem Bereich eingestellt, welcher sich von dem ersten Wert bis zu dem zweiten Wert erstreckt (**Fig. 3**, Schritt 105).

Falls dann aber festgestellt wird, dass sich die wenigstens eine den Längsabstand zwischen wenigstens zwei Kraftfahrzeugen 2 bis 12 der Fahrzeugkolonne 1 repräsentierende Größe im Sinne eines größer werdenden Längsabstands d über ein bestimmtes Maß hinaus verändert hat oder gleich geblieben ist (**Fig. 3**, Schritt 104), dann wird die Längsverzögerung des Führungsfahrzeugs 2 während des laufenden Bremsvorgangs solange weiter erhöht, bis sich die wenigstens eine den Längsabstand d zwischen wenigstens zwei Kraftfahrzeugen 2 bis 12 der Fahrzeugkolonne 1 repräsentierende Größe im Sinne eines kleiner werdenden Längsabstands d nicht über ein bestimmtes Maß hinaus verändert, (**Fig. 3**, Schritt 106).

Als die wenigstens eine den Längsabstand d zwischen wenigstens zwei Kraftfahrzeugen 2 bis 12 der Fahrzeugkolonne 1 repräsentierende Größe kann auch anstatt oder zusätzlich zu dem Längsabstand d eine Relativgeschwindigkeit vᵣₑₗ und/oder eine Relativbeschleunigung aᵣₑₗ zwischen wenigstens zwei Kraftfahrzeugen 2 bis 12 der Fahrzeugkolonne 1 herangezogen werden.

Möglich ist auch, dass als den Längsabstand d zwischen wenigstens zwei Kraftfahrzeugen 2 bis 12 der Fahrzeugkolonne 1 repräsentierende Größe ein Mittelwert von Längsabständen d zwischen mehreren unmittelbar hintereinanderfahrenden Kraftfahrzeugen 2 bis 12 der Fahrzeugkolonne 1 herangezogen wird.

Diese Maßnahmen resultieren darin, dass ausgehend von der vorgegebenen Mindestlängsverzögerung die Längsverzögerung bei dem Führungsfahrzeug 2 derart angepasst wird, dass das Bremsvermögen der einzelnen Teilnehmer der Fahrzeugkolonne 1 nicht überfordert wird und dadurch zum einen Kollisionen zwischen den Kraftfahrzeugen 2 bis 12 vermieden, zum andern aber auch unter dem Aspekt der Kollisionsvermeidung mit einem Hindernis eine größtmögliche Längsverzögerung aufgewendet wird.

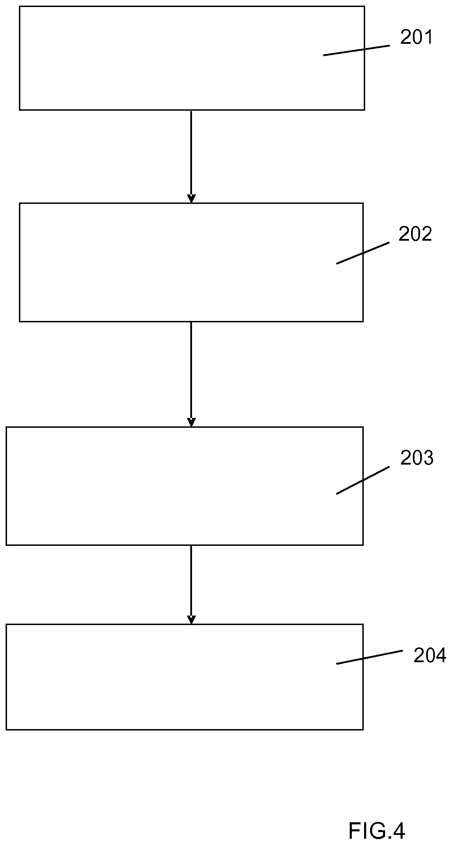

Eine weitere, nicht erfindungsgemäße Gesamtbetriebsstrategie der Fahrzeugkolonne 1 beinhaltet wenigstens die folgenden Schritte:
Wenn das Führungsfahrzeug durch einen vom Fahrer des Führungsfahrzeugs 2 und/oder durch einen bei dem Führungsfahrzeug 2 automatisch ausgelösten Bremsvorgang abgebremst wird, dann erfolgt die Abbremsung des Führungsfahrzeugs 2 zunächst mit einem ersten Wert für die Längsverzögerung, welcher der vorgegebenen Mindestlängsverzögerung entspricht, die unabhängig von einer Verzögerungsvorgabe durch den Fahrer oder von einer automatisch generierten Verzögerungsvorgabe ist (**Fig. 4**, Schritt 201).

Dann wird während des laufenden Bremsvorgangs die Längsverzögerung des letzten Kraftfahrzeugs 12 der Fahrzeugkolonne 1 auf einen Wert gesetzt, welcher einer maximal erreichbaren Längsverzögerung des letzten Kraftfahrzeugs 12 entspricht (**Fig. 4**, Schritt 202).

Dann wird ausgehend von dem letzten Kraftfahrzeug 12 bis zu dem Führungsfahrzeug 2 die von jedem Kraftfahrzeug 2 bis 12 tatsächlich erreichte Längsverzögerung festgestellt und jeweils an das unmittelbar vorausfahrende Kraftfahrzeug übermittelt **(****Fig.4****,** Schritt 203) und dann die Längsverzögerung des unmittelbar vorausfahrenden Kraftfahrzeugs auf die von dem unmittelbar nachfolgenden Kraftfahrzeug tatsächlich erreichte Verzögerung eingestellt **(****Fig.4****,** Schritt 204).

Mit anderen Worten wird ein nachfolgendes Kraftfahrzeug gegenüber dem diesem unmittelbar vorausfahrenden Kraftfahrzeug stärker abgebremst, was schließlich dazu führt, dass sich die Längsabstände zwischen aufeinander folgenden Kraftfahrzeugen in der Fahrzeugkolonne 1 gesehen von hinten nach vorne vergrößern. Dadurch wird zum einen die Sicherheit gegenüber Kollisionen innerhalb der Fahrzeugkolonne 1 erhöht. Zum andern wird aber auch durch die sukzessive Erhöhung der Längsverzögerung von hinten nach vorne eine größtmögliche Längsverzögerung aufgewendet, welche hilft, dass eine Kollision des Führungsfahrzeugs 2 mit dem Hindernis vermieden wird.

Beispielsweise wird die festgestellte, von jedem Kraftfahrzeug 12 bis 2 tatsächlich erreichte Verzögerung an das unmittelbar vorausfahrende Kraftfahrzeug 12 bis 2 jeweils mittels der Fahrzeug-zu-Fahrzeug-Kommunikation 14 übermittelt.

Als Führungsfahrzeug 2 der Fahrzeugkolonne 1 wird insbesondere ein erstes Kraftfahrzeug 2 der Fahrzeugkolonne 1 verstanden, wie es ständig die automatisch lose gekoppelte Fahrzeugkolonne 1 anführt, ohne von dieser ersten führenden Position abgelöst zu werden.

Alternativ kann als Führungsfahrzeug 2 der Fahrzeugkolonne 1 auch ein dem Führungsfahrzeug einer ursprünglichen Fahrzeugkolonne nachfolgendes Kraftfahrzeug herangezogen werden, welches abgebremst wird oder abgebremst werden muss, wenn ein in Bezug auf die Fahrzeugkolonne 1 externes Fahrzeug oder ein externes Hindernis an irgendeiner Stelle in die Fahrzeugkolonne 1 eingedrungen ist und dadurch ein Abbruchkriterium für die ursprüngliche Fahrzeugkolonne 1 ausgelöst worden ist. In einem solchen Fall bildet dann das abgebremste Kraftfahrzeug das (neue) Führungsfahrzeug einer restlichen und neu zu bildenden Fahrzeugkolonne aus dem abgebremsten Kraftfahrzeug dem wenigstens einen diesem nachfolgenden Kraftfahrzeug, sofern ein solches vorhanden ist.

### BEZUGSZEICHENLISTE

- 1: Fahrzeugkolonne
- 2: Führungsfahrzeug, erstes Fahrzeug
- 4: zweites Kraftfahrzeug
- 6: drittes Kraftfahrzeug
- 8: viertes Kraftfahrzeug
- 10: fünftes Kraftfahrzeug
- 12: sechstes Kraftfahrzeug
- 14: Fahrzeug-zu-Fahrzeug-Kommunikation

## Patentansprüche

1. Verfahren zum Bewegen einer ein erstes führendes Kraftfahrzeug (2) und wenigstens ein dem ersten führenden Kraftfahrzeug (2) elektronisch gekoppelt nachfolgendes zweites Kraftfahrzeug (4, 6, 8, 10, 12) aufweisenden Fahrzeugkolonne (10), bei welchem die Kraftfahrzeuge (2, 4, 6, 8, 10, 12) auf Basis einer der Fahrzeugkolonne (1) zugeordneten, vorgebbaren Gesamtbetriebsstrategie (Kolonnenregler) zumindest vorübergehend in einem vorgebbaren, gleichbleibenden Längsabstand (a) zueinander entlang einer Fahrstrecke bewegt werden, **dadurch gekennzeichnet, dass** die Gesamtbetriebsstrategie (G) wenigstens die folgenden Schritte beinhaltet:
a) Wenn das erste führende Kraftfahrzeug (2) durch einen vom Fahrer des ersten führenden Kraftfahrzeugs (2) und/oder durch einen bei dem ersten führenden Kraftfahrzeug (2) automatisch ausgelösten Bremsvorgang abgebremst wird, dann erfolgt die Abbremsung des ersten führenden Kraftfahrzeugs (2) zunächst mit einem ersten Wert für die Längsverzögerung, welcher einer vorgegebenen Mindestlängsverzögerung entspricht, die unabhängig von einer Verzögerungsvorgabe durch den Fahrer oder von einer automatisch generierten Verzögerungsvorgabe ist, dann
b) wird während des laufenden Bremsvorgangs wenigstens eine den Längsabstand (d) zwischen wenigstens zwei Kraftfahrzeugen (2 bis 12) der Fahrzeugkolonne (1) repräsentierende Größe detektiert, und dann
c) wird die Längsverzögerung des ersten führenden Kraftfahrzeugs (2) während des laufenden Bremsvorgangs auf einen zweiten Wert erhöht, welcher größer als der erste Wert ist und wiederum die wenigstens eine, sich dann einstellende den Längsabstand (d) zwischen den wenigstens zwei Kraftfahrzeugen (2 bis 12) der Fahrzeugkolonne (1) repräsentierende Größe festgestellt, und
d) falls dann festgestellt wird, dass sich die wenigstens eine den Längsabstand (d) zwischen wenigstens zwei Kraftfahrzeugen (2 bis 12) der Fahrzeugkolonne (1) repräsentierende Größe im Sinne eines kleiner werdenden Längsabstands (d) über ein bestimmtes Maß hinaus verändert hat, dann wird die Längsverzögerung des ersten führenden Kraftfahrzeugs (2) auf einen Wert in einem Bereich eingestellt, welcher sich von dem ersten Wert bis zu dem zweiten Wert erstreckt, und
e) falls dann aber festgestellt wird, dass sich die wenigstens eine den Längsabstand (a) zwischen wenigstens zwei Kraftfahrzeugen (2 bis 12) der Fahrzeugkolonne (1) repräsentierende Größe im Sinne eines größer werdenden Längsabstands (d) über ein bestimmtes Maß hinaus verändert hat oder gleich geblieben ist, dann wird die Längsverzögerung des ersten führenden Kraftfahrzeugs (2) während des laufenden Bremsvorgangs solange weiter erhöht, bis sich die wenigstens eine den Längsabstand (d) zwischen wenigstens zwei Kraftfahrzeugen (2 bis 12) der Fahrzeugkolonne (1) repräsentierende Größe im Sinne eines kleiner werdenden Längsabstands (d) nicht über ein bestimmtes Maß hinaus verändert.

2. Verfahren nach Anspruch 1, **dadurch gekennzeichnet, dass** die Kraftfahrzeuge (2 bis 12) der Fahrzeugkolonne (1) jeweils mit einer Fahrzeugfolgeregelung ausgestattet sind, wobei bei den Kraftfahrzeugen (2 bis 12) der Fahrzeugkolonne (1) jeweils durch die Fahrzeugfolgeregelung Längsführungseingriffe vorgenommen werden, um die Kraftfahrzeuge (2 bis 12) zumindest vorübergehend in dem vorgebbaren, gleichbleibenden Längsabstand (d) zueinander entlang der Fahrstrecke zu bewegen.

3. Verfahren nach Anspruch 1 oder 2, **dadurch gekennzeichnet, dass** das erste führende Kraftfahrzeug (2) den Bremsvorgang mittels einer Betätigung eines Bremsbetätigungsorgans durch den Fahrer und/oder durch eine Autopiloteinrichtung des ersten führenden Kraftfahrzeugs (2) abhängig von erfassten Umfelddaten automatisch einleitet.

4. Verfahren nach einem der vorhergehenden Ansprüche, **dadurch gekennzeichnet, dass** als vorgegebene Mindestverzögerung eine gesetzlich vorgegebene Mindestverzögerung herangezogen wird.

5. Verfahren nach einem der vorhergehenden Ansprüche, **dadurch gekennzeichnet, dass** als die wenigstens eine den Längsabstand (d) zwischen wenigstens zwei Kraftfahrzeugen der Fahrzeugkolonne (1) repräsentierende Größe der Längsabstand (d) und/oder eine Relativgeschwindigkeit und/oder eine Relativbeschleunigung zwischen den wenigstens zwei Kraftfahrzeugen (2 bis 12) der Fahrzeugkolonne (1) herangezogen wird.

6. Verfahren nach einem der vorhergehenden Ansprüche, **dadurch gekennzeichnet, dass** als den Längsabstand (d) zwischen wenigstens zwei Kraftfahrzeugen (2 bis 12) der Fahrzeugkolonne (1) repräsentierende Größe ein Mittelwert von Längsabständen (d) zwischen mehreren unmittelbar aufeinander folgenden Kraftfahrzeugen (2 bis 12) der Fahrzeugkolonne (1) herangezogen wird.

7. Verfahren nach einem der vorhergehenden Ansprüche, **dadurch gekennzeichnet, dass** als erstes führendes Kraftfahrzeug (2) ein die Fahrzeugkolonne (1) Kraftfahrzeug herangezogen wird, welches die Fahrzeugkolonne (1) führt, ohne dass dieses Kraftfahrzeug (2) von der ersten führenden Position abgelöst worden ist, oder ein dem ersten führenden Kraftfahrzeug einer ursprünglichen Fahrzeugkolonne (1) nachfolgendes Kraftfahrzeug, welches abgebremst wird oder abgebremst werden muss, wenn ein in Bezug auf die ursprüngliche Fahrzeugkolonne externes Fahrzeug oder Hindernis an irgendeiner Stelle in die ursprüngliche Fahrzeugkolonne eingedrungen ist und dadurch ein Abbruchkriterium für die ursprüngliche Fahrzeugkolonne ausgelöst worden ist, wobei dann das abgebremste Kraftfahrzeug das erste führende Kraftfahrzeug einer restlichen oder neu zu bildenden Fahrzeugkolonne aus dem abgebremsten Kraftfahrzeug und wenigstens einem diesem nachfolgenden Kraftfahrzeug gebildet wird, sofern ein solches vorhanden ist.

8. Verfahren nach einem der vorhergehenden Ansprüche, **dadurch gekennzeichnet, dass** bei wenigstens einem der Kraftfahrzeuge (2 bis 12) der Fahrzeugkolonne (1) Längseingriffe durch Erzeugen von Stellsignalen für eine Antriebsmaschine und/oder für eine Bremseinrichtung des betreffenden Kraftfahrzeugs (2 bis 12) erfolgen.

## Claims

1. Method for moving a line of vehicles (10) having a first, leading motor vehicle (2) and at least one second motor vehicle (4, 6, 8, 10, 12) electronically coupled to the first, leading motor vehicle (2), in which method the motor vehicles (4, 6, 8, 10, 12) are at least temporarily moved along a route at a predefinable constant longitudinal mutual distance (a) based on a predefinable overall operating strategy (line controller) assigned to the line of vehicles (10), **characterised in that** the overall operating strategy (G) contains at least the following steps:
a) If the first, leading motor vehicle (2) s braked in a braking process triggered by the driver of the first, leading motor vehicle (2) and/or automatically in the first, leading motor vehicle (2), the first, leading motor vehicle (2) is initially braked with a first value for the longitudinal deceleration corresponding to a predefinable minimum longitudinal deceleration that is independent of a deceleration specification of the driver or of an automatically generated deceleration specification, then
b) during the running braking process at least one variable representing the longitudinal distance (d) between at least two motor vehicles (2 to 12) of the line of vehicles (1) is detected, and then
c) the longitudinal deceleration of the first, leading motor vehicle (2) is, during the running braking process, increased to a second value that is higher than the first value, and the at least one then appearing variable representing the longitudinal distance (d) between the at least two motor vehicles (2 to 12) of the line of vehicles (1) is once again determined, and
d) if it is then found that the at least one variable representing the longitudinal distance (d) between at least two motor vehicles (2 to 12) of the line of vehicles (1) has changed beyond a specific measure towards a decreasing longitudinal distance (d), the longitudinal distance of the first, leading motor vehicle (2) is adjusted to a value in a range extending from the first value to the second value, and
e) if it is then found, however that the at least one variable representing the longitudinal distance (d) between at least two motor vehicles (2 to 12) of the line of vehicles (1) has changed beyond a specific measure towards an increasing longitudinal distance (d) or has remained unchanged, the longitudinal deceleration of the first, leading motor vehicle (2) continues to be increased during the running braking process until the at least one variable representing the longitudinal distance (d) between at least two motor vehicles (2 to 12) of the line of vehicles (1) does not change beyond a specific measure towards a decreasing longitudinal distance (d).

2. Method according to claim 1, **characterised in that** each of the motor vehicles (2 to 12) of the line of vehicles (1) is equipped with a vehicle sequence control, wherein, in the motor vehicles (2 to 12) of the line of vehicles (1), longitudinal guidance interventions are made by the vehicle sequence control, in order to move the motor vehicles (2 to 12) at least temporarily along the route at the predefinable longitudinal mutual distance (d).

3. Method according to claim 2, **characterised in that** the first, leading motor vehicle (2) automatically initiates the braking process by means of an actuation of a brake actuating element by the driver and/or by an autopilot device of the first, leading motor vehicle (2) in dependence on detected environmental data.

4. Method according to any of the preceding claims **characterised in that** a minimum deceleration required by law is used as predefined minimum deceleration.

5. Method according to any of the preceding claims **characterised in that** the longitudinal distance (d) and/or a relative speed and/or a relative acceleration between the at least two motor vehicles (2 to 12) of the line of vehicles (1) is/are used as the at least one variable representing the longitudinal distance (d) between at least two motor vehicles of the line of vehicles (1).

6. Method according to any of the preceding claims **characterised in that** an average value of longitudinal distances (d) between several immediately consecutive motor vehicles (2 to 12) of the line of vehicles (1) is used as the variable representing the longitudinal distance (d) between at least two motor vehicles (2 to 12) of the line of vehicles (1).

7. Method according to any of the preceding claims **characterised in that** a motor vehicle leading the line of vehicles (1) without said motor vehicle (2) having been removed from the first, leading position, or a motor vehicle following the first, leading motor vehicle of an original line of vehicles (1), which is or has to be braked if a vehicle or obstacle external to the original line of vehicles has infiltrated the original line of vehicles at any point, whereby a termination criterion has been triggered for the original line of vehicles, is used as the first, leading motor vehicle (2), wherein the braked motor vehicle then forms the first, leading motor vehicle of a remaining or newly to be formed line of vehicles made up from the braked motor vehicle and at least one motor vehicle following the former, if existing.

8. Method according to any of the preceding claims **characterised in that** longitudinal interventions are made in at least one of the motor vehicles (2 to 12) of the line of vehicles (1) by generating actuating signals for a driving engine and/or for a braking device of the respective motor vehicle (2 to 12).

## Revendications

1. Procédé de déplacement d'une colonne (10) de véhicules ayant un premier véhicule (2) automobile de tête et au moins un deuxième véhicule (4, 6, 8, 10, 12) automobile suivant couplé électroniquement au premier véhicule (2) automobile de tête, dans lequel on déplace les véhicules (2, 4, 6, 8, 10, 12) automobiles sur la base d'une stratégie (régleur de colonne) de fonctionnement d'ensemble associée à la colonne (1) de véhicules et pouvant être donnée à l'avance le long d'une voie de circulation à une distance (a) longitudinale les uns par rapport aux autres pouvant être donnée à l'avance au moins transitoirement et restant constante, **caractérisée en ce que** la stratégie (G) de fonctionnement d'ensemble comporte au moins les stades suivants :
a) si l'on freine le premier véhicule (2) automobile de tête par une opération de freinage déclenchée par le conducteur du premier véhicule (2) automobile de tête et/ou automatiquement dans le premier véhicule (2) automatique de tête, le freinage du premier véhicule (2) automobile de tête s'effectue d'abord à une première valeur de la décélération longitudinale, qui correspond à une décélération longitudinale minimum donnée à l'avance, qui est indépendante d'une prescription de décélération par le conducteur ou d'une prescription de décélération produite automatiquement, ensuite
b) si, pendant l'opération de freinage en cours, au moins une grandeur représentant la distance (d) longitudinale entre au moins deux véhicules (2 à 12) automobiles de la colonne (1) de véhicules est détectée, et ensuite
c) si la décélération longitudinale du premier véhicule (2) automobile de tête augmente pendant l'opération de freinage en cours à une deuxième valeur, qui est plus grande que la première valeur et si l'on constate à nouveau la au moins une grandeur qui s'établit et qui représente la distance (d) longitudinale entre les au moins deux véhicules (2 à 12) automobiles de la colonne (1) de véhicules, et
d) si ensuite l'on constate que la grandeur représentant au moins la distance (d) longitudinale entre au moins deux véhicules (2 à 12) automobiles de la colonne (1) de véhicules se modifie dans le sens d'une distance (d) longitudinale devenant plus petite au-delà d'une mesure définie, la décélération longitudinale du premier véhicule (2) automobile de tête est réglée à une valeur dans une plage qui s'étend de la première valeur à la deuxième valeur, et
e) mais si l'on constate ensuite que la au moins une grandeur représentant la distance (a) longitudinale entre au moins deux véhicules (2 à 12) automobiles de la colonne (1) de véhicules s'est modifiée dans le sens d'une distance (d) longitudinale devenant plus grande au-delà d'une mesure définie ou est restée la même, la décélération longitudinale du premier véhicule (2) automobile de tête continue à être augmentée pendant l'opération de freinage en cours jusqu'à ce que la au moins une grandeur représentant la distance (d) longitudinale entre au moins deux véhicules (2 à 12) automobiles de la colonne (1) de véhicule ne se modifie pas dans le sens d'une distance (d) longitudinale devenant plus petite au-delà d'une mesure définie.

2. Procédé suivant la revendication 1, **caractérisé en ce que** les véhicules (2 à 12) automobiles de la colonne (1) de véhicules sont équipés chacun d'une régulation de suivi de véhicule, dans lequel on effectue pour des véhicules (2 à 12) automobiles de la colonne (1) de véhicules respectivement par la régulation de suivi de véhicule des interventions de guidage longitudinal afin de déplacer au moins transitoirement les véhicules (2 à 12) automobiles les uns par rapport aux autres le long de la voie de circulation à la distance (d) longitudinale pouvant être donnée à l'avance et restant la même.

3. Procédé suivant la revendication 1 ou 2, **caractérisé en ce que** le premier véhicule (2) automobile de tête fait commencer l'opération de freinage au moyen d'un actionnement d'un organe d'actionnement de frein par le conducteur et/ou automatiquement par un dispositif d'autopilotage du premier véhicule (2) automobile de tête en fonction de la détection de donnée sur l'environnement.

4. Procédé suivant l'une des revendications précédentes, **caractérisé en ce que** l'on utilise comme décélération minimum donnée à l'avance une décélération minimum donnée à l'avance légalement.

5. Procédé suivant l'une des revendications précédentes, **caractérisé en ce que** l'on utilise comme la au moins une grandeur représentant la distance (d) longitudinale entre au moins deux véhicules automobiles de la colonne (1) de véhicules, la distance (d) longitudinale et/ou une vitesse relative et/ou une accélération relative entre les au moins deux véhicules (2 à 12) automobiles de la colonne (1) de véhicules.

6. Procédé suivant l'une des revendications précédentes, **caractérisé en ce que** l'on utilise comme grandeur représentant la distance (d) longitudinale entre au moins deux véhicules (2 à 12) automobiles de la colonne (1) de véhicules une valeur moyenne de distances (d) longitudinales entre plusieurs véhicules (2 à 12) automobiles se suivant directement de la colonne (1) de véhicules.

7. Procédé suivant l'une des revendications précédentes, **caractérisé en ce que** l'on utilise comme premier véhicule (2) automobile de tête un véhicule automobile de la colonne (1) de véhicules, qui conduit la colonne (1) de véhicules sans que ce véhicule (2) automobile n'est été détaché de la première position de tête ou un véhicule automobile suivant le premier véhicule automobile de tête d'une colonne (1) initiale de véhicules qui a été freinée et ou qui doit être freinée lorsque, un véhicule extérieur à la colonne initiale de véhicules ou un obstacle fait irruption en un point quelconque dans la colonne initiale du véhicule et ainsi un critère de rupture de la colonne initiale du véhicule a été déclenchée, dans lequel ensuite le véhicule automobile freiné forme le premier véhicule automobile de tête d'une colonne de véhicules restant ou à reformer à partir du véhicule automobile freiné et d'au moins un véhicule automobile suivant, dans la mesure où il y en a un.

8. Procédé suivant l'une des revendications précédentes, **caractérisé en ce, que** pour au moins l'un des véhicules (2 à 12) automobiles de la colonne (1) de véhicules, des interventions longitudinales sont effectuées par production de signaux de réglage d'une machine d'entraînement et/ou d'un dispositif de freinage du véhicule (2 à 12) concerné.
